# EUROPEAN PATENT APPLICATION

(11) **EP 1 610 582 A1**
(43) Date of publication of application: **28.12.2005**
(21) Application number: 05104763.7
(22) Date of filing: 01.06.2005
(51) Int. Cl.: H04Q 7/38, H04L 9/06, H04L 9/00

(54) **Secure Communication**

(30) Priority: 21.06.2004 KR 2004046080
(71) Applicant: SAMSUNG ELECTRONICS CO., LTD., Suwon-si, Gyeonggi-do (KR)
(72) Inventor: Lee, Bong-geun, Gyeonggi-do (KR); Kim, Kun-tae, Gyeonggi-do, (KR)
(74) Representative: Geary, Stuart Lloyd

(57) **Abstract**

An apparatus and method of protecting content from a third party in a communication system including a wired section and a wireless section. The content transferred through the wired section is scrambled separately from a transfer through the wireless section. A controller of a sending end determines scrambling algorithms and a scrambling order to be used in the wired section, and provides related information to a controller of a receiving end. The sending end scrambles the content according to the scrambling algorithms and order. The receiving end descrambles the content by use of the provided related information.

## Description

The present invention relates to secure communication.

Wireless communication technology is taking the place of wired communication technology in many situations. Wireless communication technology is superior to wired communication technology in several respects. Specifically, wireless communication technology enables a user to obtain information anywhere with range of a base station or access point. However, wireless communication technology has a drawback in that communication is inherently insecure, compared with wired communication technology, and various remedies for this, such as encryption, have been developed.

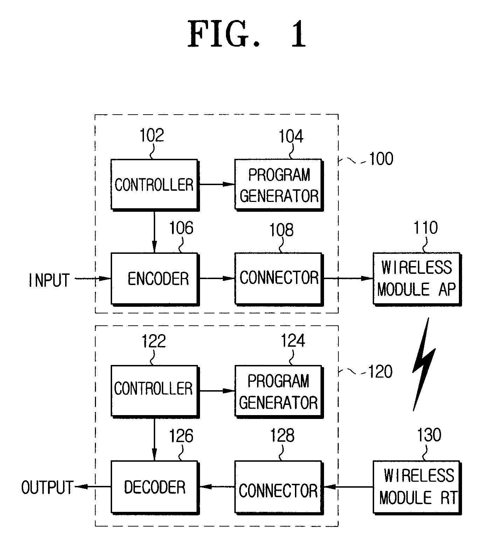

Figure 1 illustrates a communication system which includes a sending end 100 for providing content and a receiving end 120 for receiving content from the sending end 100. The sending end 100 includes an encoder 106, a controller 102, a connector 108 and a program generator 104. The sending end 100 further includes a wireless module access point (AP) 110 that wirelessly transfers the content. The receiving end 120 includes a controller 122, a decoder 126, a connector 128 and a program generator 124. The receiving end 120 further includes a wireless module remote terminal (RT) 130 which wirelessly receives content. The above parts are described below in more detail with reference to Figure 1.

The encoder 106 encodes the received content under the control command of the controller 102. The controller 102 sends a control command to the encoder 106 or instructs the program generator 104 to generate a required program.

The program generator 104 generates a program required for the sending end 100 under the control command of the controller 102, or is assigned with and performs some functions of the controller 102. The content, encoded by the encoder 106, is supplied to the connector 108. The connector 108 forwards the encoded content from the encoder 106 to the wireless module AP 110. The wireless module AP 110 wirelessly transmits the content, received from the connector 108. The wireless module AP 110 scrambles the content for wireless delivery so as to protect the content from third parties. Typically, the wireless module AP 110 scrambles the content using a scrambling code.

The content delivered from the wireless module AP 110 is received at the wireless module RT 130. The wireless module RT 130 performs the reverse operation to that carried out in the wireless module AP 110. That is, the wireless module RT 130 descrambles the received content using the scrambling code. The scrambling code of the wireless module RT 130 is the same as that of the wireless module AP 110. As a result, the wireless module RT 130 obtains the descrambled encoded content.

The descrambled content, obtained by the wireless module RT 130, is provided to the connector 128. The connector 128 then forwards the received content from the wireless module RT 130 to the decoder 126. The decoder 126 decodes the received content. The decoding algorithm used by the decoder 126 is the reciprocal of the encoding algorithm, used by the encoder 106. Accordingly, the receiving end 120 acquires the desired content. The controller 122 controls the parts of the receiving end 120, specifically by sending control commands to each of these parts. The program generator 124 generates a program to be used at the receiving end 120. Typically, the function of the program generator 124 of the receiving end 120 is the complement of the program generator 104 of the sending end 100.

As explained above, in order to protect the content, provided from the content provider, from a third party, the wireless module AP 110 scrambles the content and the wireless module RT 130 descrambles the scrambled content. In contrast, the sending end (wired section) 100 and the receiving end (wired section) 120 cannot protect the content from a third party. In other words, a third party is able to obtain an intended content from the connectors 108, 128 without much difficulty. A third party may obtain the encoded content from the connectors 108, 128 and decode the obtained content using the decoding algorithm. Accordingly, a solution is required to protect content from a third party both in the wireless section and in the wired section.

The present general inventive concept provides an apparatus and method of protecting content from a third party not only in a wireless section, but also in a wired section.

The present general inventive concept also provides an apparatus and method of providing content only to an intended user by protecting the content from a third party in a wired section as well as in a wireless section.

Additional aspects and advantages of the present general inventive concept will be set forth in part in the description which follows and, in part, will be obvious from the description, or may be learned by practice of the general inventive concept.

The foregoing and/or other aspects and advantages of the present general inventive concept are achieved by providing a scrambling apparatus including a controller to generate at least one scrambling algorithm to be used in a wired section, a program generator to scramble input content according to the scrambling algorithm generated by the controller, and a wireless module access point (AP) to wirelessly transmit the scrambled content.

The foregoing and/or other aspects and advantages of the present general inventive concept are also achieved by providing a descrambling apparatus including a wireless module remote terminal (RT) to provide wirelessly received content, a controller to receive and store descrambling algorithms to be used in a wired section and information relating to a usage order of the descrambling algorithms, and a program generator to descramble the received content using the stored descrambling algorithms and usage order.

The foregoing and/or other aspects and advantages of the present general inventive concept are also achieved by providing a scrambling method including generating at least one scrambling algorithm to be used in a wired section, scrambling input content using the generated scrambling algorithm, and wirelessly transmitting the scrambled content through a wireless module access point (AP).

The foregoing and/or other aspects and advantages of the present general inventive concept are also achieved by providing a descrambling method including receiving and storing descrambling algorithms to be used in a wired section and information relating to a usage order of the descrambling algorithms from a sending end, wirelessly receiving and providing content by a wireless module remote terminal (RT), and descrambling the received content using the stored descrambling algorithms and usage order.

An embodiment of the present invention will now be described, by way of example, with reference to Figures 2 to 4 of the accompanying drawings, in which:
Figure 1 illustrates the sending and receiving ends of a conventional wireless communication system;
Figure 2 illustrates the sending and receiving ends of a wireless communication system according to the present invention;
Figure 3 illustrates a scrambling code generator for generate a scrambling code; and
Figure 4 illustrates operations of the sending end and the receiving end of the wireless communication system of Figure 2.

Well-known functions and constructions will not be described in detail since they would hide the invention in unnecessary detail.

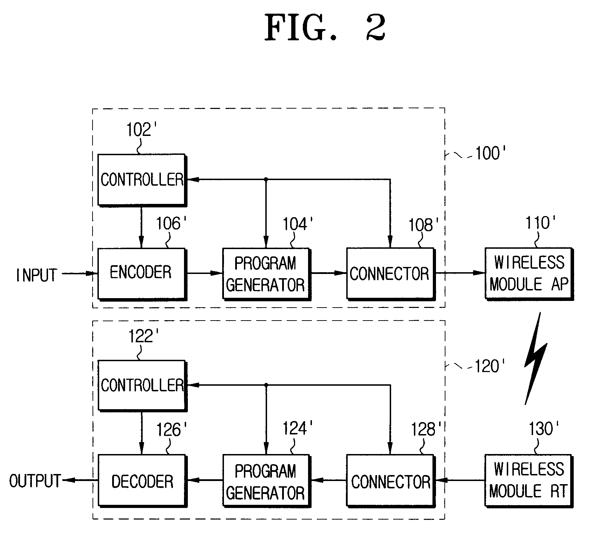

Referring to Figure 2, a sending end 100' includes an encoder 106', a controller 102', a connector 108' and a program generator 104'. The sending end 100' is connected to a wireless module access point (AP) 110' which wirelessly transfers the content. The receiving end 120' includes a controller 122', a decoder 126', a connector 128' and a program generator 124'. The receiving end 120' is connected to a wireless module remote terminal (RT) 130' which receives the wirelessly transferred content. The components of the communication system are described in greater detail below.

The encoder 106' receives content input from a content provider. The content can be video information, audio information or the like. The encoder 106' encodes the received content. Accordingly, the encoder 106' reduces the volume of the content and decreases the probability of error in scrambling the content. The encoded content is provided to the program generator 104' of the sending end 100'. The program generator 104' of the sending end 100' scrambles the encoded content to be transferred in a wired section (i.e. the sending end 100' and the receiving end 120'). That is, the program generator 104' of the sending end 100' scrambles the content using a set scrambling algorithm to protect the content from a third party when the content is transferred through the wired section.

The controller 102' of the sending end 100' controls the encoder 106' and the program generator 104' of the sending end 100'. Under the control of the controller 102', the encoder 106' encodes the content and the program generator 104' scrambles the encoded content.

The content, scrambled by the program generator 104' of the sending end 100', is then supplied to the connector 108' of the sending end 100'. The connector 108' forwards the scrambled content from the program generator 104' to the wireless module AP 110'. The connector 108' may be connected with a plurality of wireless module APs according to a user's setup.

The wireless module AP 110' is provided separately from but connected with the sending end 100' in a wired manner. The wireless module AP 110' wirelessly transmits the content, forwarded from the connector 108'. To protect the wirelessly transmitted content from being accessed by a third party, the wireless module AP 110' scrambles the content again.

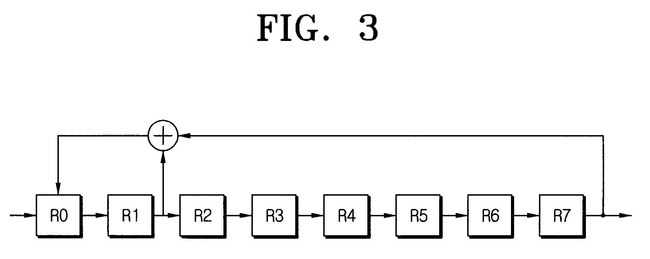

Referring to Figure 3, a scrambling code generator for generating a scrambling code, used by the wireless module AP 110', includes a plurality of shift registers (R0-R7) and an exclusive OR operator. The shift registers (R0-R7) shift received information to the right at predetermined time intervals. For example, the shift register R0 transfers stored information to the shift register R1 and receives new information after a specific time T1. The shift register R1 transfers the received information to the shift register R2 and receives new information from shift register R0 after a specific time T1×2. In this manner, the scrambling code generator can output different information from the input information. The details of the scrambling code generator are not directly related to the present invention and, therefore, are not described herein. The scrambling code blocks a third party, who does not have the scrambling code, from accessing or obtaining the content.

The content is wirelessly transmitted from the wireless module AP 110' to the wireless module RT 130'. The wireless module RT 130' carries out a reverse operation to the scrambling operation performed by the wireless module AP 110'. That is, the wireless module RT 130' descrambles the content, scrambled at the wireless module AP 110'. The content, descrambled at the wireless module RT 130', is then transferred to the connector 128' of the receiving end 120'. The connector 128' connects the external wireless module RT 130' with the receiving end 120'. A plurality of wireless module RTs can be connected to the connector 128'. The connector 128' then forwards the content to the program generator 124' of the receiving end 120'.

The program generator 124' of the receiving end 120' carries out the reverse operation to the scrambling operation performed in the program generator 104' of the sending end 100'. That is, the program generator 124' of the receiving end 120' descrambles the received content to convert to the content to be decodable by the decoder 126'.

The decoder 126' decodes the content descrambled by the program generator 124' of the receiving end 120'. A decoding algorithm used by the decoder 126' corresponds to the encoding algorithm of the encoder 106'. Thus, the receiving end 120' can obtain and output the input content. The controller 122' of the receiving end 120' controls the components in the receiving end 120', specifically, by sending control commands to these components.

As described above, the sending end 100' acts as a content provider and the receiving end 120' acts as a terminal in Figure 2, but the present general inventive concept is not limited thereto. The sending end 100' and the receiving end 120' can be any device capable of providing content through a wired section and a wireless section. For example, in a digital television (DTV), the content provider is a set-top box and the terminal is a DTV receiver. The set-top box transfers received video and audio signals to the DTV receiver through a wired section and a wireless section. In this case, the video and audio signals delivered through the wireless section are protected from a third party, but those transferred within the set-top box are vulnerable to a third party. To protect the signals, the set-top box scrambles the received video and audio signals, and the DTV receiver descrambles the video and audio signals from the set-top box.

The scrambling in the wired section (i.e., the sending end 100' of the wireless communication system of Figure 2) is described below.

The controller 102' of the sending end 100' generates a scrambling algorithm. The controller 102' of the sending end 100' generates at least two scrambling algorithms so as to protect the content from a third party. Table 1 illustrates the scrambling algorithms generated by the controller 102' of the sending end 100'.

**[Table 1]**

| | |
|---|---|
| Algorithm 1 | Change first bit with fourth bit |
| Algorithm 2 | Inverting second bit |
| ... | ... |
| Algorithm N | Change second bit with eight bit |

In Table 1, the scrambling algorithms generated by the controller 102' of the sending end 100' include an algorithm to exchange specific bits and an algorithm to invert a specific bit. It is to be understood that the controller 102' can generate other algorithms in addition to the above-mentioned algorithms. The controller 102' can more effectively scramble content using at least two scrambling algorithms in an alternative manner. For example, the controller 102' can scramble a first packet using the algorithm 2, and can scramble a second packet using the algorithm 1. The controller 102 may use the scrambling algorithms a different number of times.

Information relating to the scrambling algorithms and the scrambling order generated by the controller 102' of the sending end 100' is provided to the receiving end 120'. The controller 102' provides the information relating to the scrambling algorithms and the scrambling order to the wireless module AP 110' via the connector 108' of the sending end 100'. The wireless module AP 110' scrambles and transmits the provided information to the wireless module RT 130'. The wireless module RT 130' descrambles and provides the transmitted information to the connector 128' of the receiving end 120'. The connector 128' forwards the provided information to the controller 122' of the receiving end 120'. Thus, the receiving end 120' can obtain the original information generated by the controller 102' of the sending end 100'.

Generally, a packet transmission unit of the sending end 100' is 188 bytes, and 8 bits are transmitted as a clock unit. Thus, the controller 102' of the sending end 100' scrambles the content by groups of 8 bits, and can change the scrambling algorithms every 188 bytes.

The program generator 104' of the sending end 100' scrambles the content from the encoder 106' using the information relating to the scrambling algorithms and the scrambling order provided from the controller 102' of the sending end 100'. For example, it is assumed that the program generator 104' scrambles the input content using the algorithm 1. If the content "0111 1100" is provided to the program generator 104', the scrambled content "1110 1100" is output.

The program generator 124' of the receiving end 120' descrambles the received content using the scrambling algorithm used by the program generator 104' of the sending end 100'. It is to be noted that the program generator 124' descrambles the content according to a control command from the controller 122'.

As described above, the scrambling information is transmitted to the receiving end 120', and the scrambled content is delivered subsequently, but the present general inventive concept is not limited thereto. It is possible to transmit both the scrambling information and the scrambled content simultaneously.

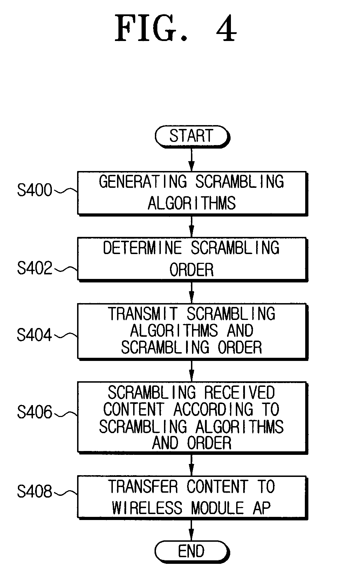

Referring to Figure 4, in operation, the controller 102' of the sending end 100' generates the scrambling algorithms (operation S400). The controller 102' generates at least two scrambling algorithms as described above. The controller 102' then determines the order in which to use the generated scrambling algorithms (operation S402). That is, at least two scrambling algorithms are used in an alternative manner to enhance scrambling efficiency.

The sending end 100' transmits the generated scrambling algorithms and the determined scrambling order to the receiving end 120' (operation S404).

The program generator 104' of the sending end 100' scrambles the incoming content according to the generated scrambling algorithms and the determined scrambling order (operation S406), and provides the scrambled content to the wireless module AP 110' (operation S408).

The operations of the receiving end 120' are opposite to those of the sending end 100'. That is, the receiving end 120' receives the generated scrambling algorithms and the determined scrambling order, and descrambles the scrambled content using the generated scrambling algorithms and the determined scrambling order.

As described above, the content is scrambled with respect to a wired section in a communication system including both the wired section and a wireless section, but the present general inventive concept is not limited to this communication system. A communication system including only a wired section can be employed according to the present general inventive concept. For example, if a user wants to move information from a first device to a second device by using a storage medium, the first device can serve as the sender. Accordingly, even when the user loses the storage medium, a third party cannot obtain the information in the storage medium. In other words, only the second device can obtain the information in the storage medium.

As described above, in order to protect content transferred through a wired section as well as a wireless section from a third party, the content delivered through the wired section is scrambled. Thus, only those who request the content can access and obtain the content. When information in a certain device is moved to another device by use of a storage medium, the information is scrambled before being stored in the storage medium such that the information is protected even if the storage medium is lost.

## Claims

1. A scrambling apparatus comprising:
a controller to generate at least one scrambling algorithm to be used in a wired section;
a program generator to scramble input content according to the scrambling algorithm generated by the controller; and
a wireless module access point (AP) to wirelessly transmit the content scrambled by the program generator.

2. The scrambling apparatus of claim 1, further comprising:
an encoder to encode the input content according to a control command of the controller and provide the encoded content to the program generator; and
a connector to connect the program generator with the wireless module AP.

3. The scrambling apparatus of claim 2, wherein the controller generates at least two scrambling algorithms and information relating to an order of using the generated scrambling algorithms.

4. The scrambling apparatus of claim 3, wherein the controller transfers the generated scrambling algorithms and the information relating to the usage order to a receiving end.

5. The scrambling apparatus of claim 3, wherein the scrambling algorithms exchange positions of specific bits among encoded bits of the encoded content, or invert a specific bit of the encoded content.

6. A descrambling apparatus comprising:
a wireless module remote terminal (RT) to provide wirelessly received content;
a controller to receive and store descrambling algorithms to be used in a wired section and information relating to a usage order of the descrambling algorithms; and
a program generator to descramble the received content using the stored descrambling algorithms and usage order.

7. The descrambling apparatus of claim 6, further comprising:
a connector to connect the wireless module RT with the program generator; and
a decoder to decode the content descrambled by the program generator.

8. A scrambling method, comprising:
generating at least one scrambling algorithm to be used in a wired section;
scrambling input content using the generated scrambling algorithm; and
wirelessly transmitting the scrambled content through a wireless module access point (AP).

9. The scrambling method of claim 8, wherein the generating at least one scrambling algorithm comprises:
generating at least two scrambling algorithms and information relating to an order of using the generated scrambling algorithms.

10. The scrambling method of claim 9, further comprising:
transferring the generated scrambling algorithms and the information relating to the usage order to a receiving end.

11. The scrambling method of claim 9, wherein the scrambling algorithms exchange positions of specific bits among encoded bits of the content, or invert a specific bit of the content.

12. A descrambling method comprising:
receiving and storing descrambling algorithms to be used in a wired section and information relating to a usage order of the descrambling algorithms from a sending end;
wirelessly receiving and providing content by a wireless module remote terminal (RT); and
descrambling the received content using the stored descrambling algorithms and usage order.

13. The descrambling method of claim 12, wherein the descrambling algorithms exchange positions of specific bits among encoded bits of the received content, or invert a specific bit of the received content.

14. An information delivery system comprising:
a first memory to scramble stored information and output the scrambled information;
a storage medium to receive and provide the information from the first memory; and
a second memory to descramble and store the information from the storage medium.

15. A communication system comprising:
a first wired portion to generate scrambling algorithms, to scramble input content using the generated scrambling algorithms, and to wirelessly transmit the generated scrambling algorithms and the scrambled content; and
a second wired portion wirelessly connected to the first wired portion to receive the wirelessly transmitted scrambling algorithms and scramble content, and to descramble the received scrambled content using the received scrambling algorithms.

16. The communication system of claim 15, wherein the first wired portion comprises:
a controller to generate the scrambling algorithms; and
a program generator to scramble the input content using the generated scrambling algorithms.

17. The communication system of claim 15, further comprising:
a wireless module access point connected to the first wired portion to wirelessly transmit the generated scrambling algorithms and the scrambled content; and
a wireless module remote terminal connected to the second wired portion to receive the wirelessly transmitted scrambling algorithms and scrambled content.

18. A communication system comprising:
a wired section comprising:
a sending end to generate scrambling algorithms and scramble input content, and
a receiving end to descramble the content scrambled by the sending end; and
a wireless section comprising:
a wireless module access point (AP) connected to the sending end to wirelessly transmit the scrambled content and information regarding the scrambling algorithms, and
a wireless module remote terminal connected to the receiving end to receive the wirelessly transmitted scrambled content and information regarding the scrambling algorithms.

19. The communication system of claim 18, wherein the wireless module AP scrambles the scrambled content to create wireless transmission content, and the wireless module RT descrambles the wireless transmission content to reproduce the scrambled content.

20. The communication system of claim 18, wherein the wireless module AP scrambles the information regarding the scrambling algorithms, and the wireless module RT descrambles the scrambled information regarding the scrambling algorithms.

21. The communication system of claim 18, wherein the sending end encodes the input content into bits, and scrambles the bits of the encoded content.

22. The communication system of claim 21, wherein the sending end scrambles the bits in groups of eight.

23. The communication system of claim 18, wherein the input content comprises a plurality of packets, and the sending generates a plurality of scrambling algorithms and switches between the plurality of scrambling algorithms to scramble each packet.

24. A method of transmitting content from a first wired portion to a second wired portion in a communication system, the method comprising:
generating a plurality of scrambling algorithms in the first wired portion;
scrambling input content using the plurality of scrambling algorithms in the first wired portion;
transmitting the plurality of scrambling algorithms and the scrambled content to the second wired portion; and
descrambling the scrambled content in the second wired portion using the transmitted plurality of scrambling algorithms.

25. The method of claim 24, wherein the generating of the plurality of scrambling algorithms comprises:
generating the plurality of scrambling algorithms; and
determining an order in which to use the plurality of scrambling algorithms.

26. The method of claim 24, wherein the scrambling the input content comprises:
encoding the input content in bits; and
scrambling the bits using the plurality of scrambling algorithms.

27. The method of claim 24, wherein the transmitting of the plurality of scrambling algorithms and the scramble content to the second wired portion comprises:
wirelessly transmitting the plurality of scrambling algorithms and scrambled content to the second wired portion.

28. The method of claim 24, wherein the transmitting of the plurality of scrambling algorithms and the scrambled content to the second wired portion comprises:
scrambling the plurality of scrambling algorithms using a scrambling code;
wirelessly transmitting the scrambled plurality of scrambling algorithms and the scrambled content to the second wired portion; and
descrambling the scrambled plurality of scrambling algorithms.

29. A communication system comprising:
a wireless module access point (AP) to allow remote terminals to access content; and
a wired device to scramble the content and provide the scrambled content to the wireless module AP to wirelessly transmit the scrambled content.

30. The communication system of claim 29, wherein the wired device generates scrambling algorithms to scramble the content and provides information regarding the scrambling algorithms to the wireless module AP.

31. The communication system of claim 30, wherein the wireless module AP scrambles the information regarding the scrambling algorithms using a scrambling code.
